# EUROPÄISCHE PATENTANMELDUNG

(11) **EP 2 974 774 A1**
(43) Veröffentlichungstag der Anmeldung: **20.01.2016**
(21) Anmeldenummer: 14176992.7
(22) Anmeldetag: 15.07.2014
(51) Int. Cl.: A62C 2/06, F16L 5/04, F16L 55/10, H02G 3/04

(54) **Brandschutzband**

(71) Anmelder: HILTI Aktiengesellschaft, 9494 Schaan (LI)
(72) Erfinder: Förg, Christian, 86862 Lamerdingen (DE); Münzenberger, Herbert, 65191 Wiesbaden (DE)
(74) Vertreter: Hilti Aktiengesellschaft Corporate Intellectual Property

(57) **Zusammenfassung**

Ein Brandschutzband (24) zum Einlegen in Durchbrüche (12) in Wänden oder Decken (10) von Gebäuden weist zumindest zwei Hauptlagen (26a, 26b) aus einem intumeszierenden Material und zumindest eine zwischen benachbarten Hauptlagen (26a, 26b) angeordnete Zwischenlage (30a) aus einem zweiten intumeszierenden Material auf, wobei das zweite intumeszierende Material eine geringere Intumeszenztemperatur aufweist als das Material der Hauptlagen (26a, 26b) und wobei die Hauptlagen (26a, 26b) an einer Außenseite jeweils einen ersten Längsrand (32a, 32b) und an der entgegengesetzten Außenseite jeweils einen zweiten Längsrand (34a, 34b) haben.

## Beschreibung

Die Erfindung betrifft ein Brandschutzband zum Einlegen in Durchbrüche in Wänden oder Decken von Gebäuden.

Um eine Ausbreitung von Feuer oder Rauch in Gebäuden zu verhindern, sind verschiedene Systeme bekannt, die Öffnungen oder Durchbrüche in Decken oder Wänden im Brandfall schließen können. Häufig werden dazu Bauelemente mit einem intumeszierenden Material verwendet, die an oder in der Öffnung angeordnet sind. Im Brandfall schäumt das intumeszierende Material durch die ansteigende Temperatur auf und verschließt so die Öffnung, wodurch die Ausbreitung von Rauch oder Feuer durch diese Öffnung verhindert oder zumindest verzögert wird.

Das intumeszierende Material wird beispielsweise als Brandschutzband geliefert, das in Öffnungen oder Wanddurchbrüche gelegt werden kann. Dies ermöglicht eine flexible Anpassung an die Form und die Größe der Öffnung und an die Leitungen, die durch diese Öffnungen verlegt sind.

Aus optischen Gründen werden die Brandschutzbänder üblicherweise in die Öffnung oder den Durchbruch eingelegt. Dies hat aber den Nachteil, dass im Brandfall zunächst die dem Feuer zugewandte Stirnseite eines solchen Bandes oder einer Manschette mit einem solchen Brandschutzband mit einer relativ kleinen Fläche den hohen Temperaturen ausgesetzt ist. Das Material schäumt an dieser Stirnseite auf, wodurch aufgrund der isolierenden Eigenschaften des aufgeschäumten Materials eine Abschirmung des dahinterliegenden Materials gegen die ansteigenden Temperaturen erfolgt. Das dahinterliegende Material wird dadurch erst zeitverzögert aktiviert, da der Temperaturanstieg durch das bereits aufgeschäumte Material verlangsamt wird. Dieser Effekt wird beispielsweise zusätzlich dadurch verstärkt, dass das Brandschutzband zusätzlich durch die anliegenden Wände abgeschirmt oder sogar gekühlt wird, insbesondere wenn das Brandschutzband in die Wand oder die Decke eingebettet ist. Dieses Problem tritt besonders bei großvolumigen Leitungen, beispielsweise Abwasserleitungen, auf, die durch die Durchbrüche verlegt sind. Diese sind häufig aus einem sehr dünnwandigen Material gefertigt sind, das einen Schmelzpunkt unterhalb der Aktivierungstemperatur des intumeszierenden Materials des Brandschutzbandes hat. Übliche Materialien für solche Rohre sind beispielsweise Polyethylen oder Polypropylen, die eine Schmelztemperatur von 130 °C bis 145 °C bzw. 160 °C aufweisen. Die intumeszierenden Materialien haben üblicherweise eine Aktivierungstemperatur von ca. 200 °C.

Um dieses Problem zu beheben, sind aus dem Stand der Technik, beispielsweise aus der EP 2 088 183 A1 oder der US 5,137,658 A Materialkombinationen bekannt, die zusätzlich zum intumeszierenden Material ein Treibmittel aufweisen, das eine niedrigere Aktivierungstemperatur aufweist. Diese Materialkombinationen haben gewissermaßen eine zweistufige Intumeszenz, wodurch bereits bei einer geringen Temperatur eine Volumenvergrößerung erfolgt. Das Problem, dass eine bereits aufgeschäumte Oberfläche die darunterliegenden Schichten abschirmt, besteht aber auch bei diesen Materialkombinationen.

Eine weitere Lösungsmöglichkeit ist aus der DE 20 2012 003 405 A1 bekannt. Gemäß dieser Schrift weist das intumeszierende Material Kanäle auf, die sich von der Oberfläche in das Material erstrecken. Diese Kanäle sollen durch die vergrößerte Oberfläche eine schnellere Erwärmung des Brandschutzbandes ermöglichen. Sobald das Material aber anfängt aufzuschäumen, werden diese Kanäle geschlossen, sodass deren Wirkung reduziert ist.

Aufgabe der Erfindung ist es, ein Brandschutzband zum Einlegen in Durchbrüche in Wänden oder Decken von Gebäuden bereitzustellen, das schneller vollständig expandieren und einen größeren Querschnitt zuverlässig verschließen kann.

Zur Lösung der Aufgabe ist ein Brandschutzband zum Einlegen in Durchbrüche in Wänden oder Decken von Gebäuden vorgesehen, mit zumindest zwei Hauptlagen aus einem intumeszierenden Material, die an einer Außenseite jeweils einen ersten Längsrand und an der entgegengesetzten Außenseite jeweils einen zweiten Längsrand haben, und zumindest einer zwischen benachbarten Hauptlagen angeordneten Zwischenlage aus einem zweiten intumeszierenden Material, wobei das zweite intumeszierende Material eine geringere Intumeszenztemperatur aufweist als das Material der Hauptlagen.

Erfindungsgemäß werden also zwei intumeszierende Materialien verwendet. Diese sind aber nicht miteinander vermischt, sondern in separaten Lagen übereinander angeordnet. Die Zwischenlage aus dem zweiten intumeszierenden Material wird bei einer niedrigeren Temperatur aktiviert, sodass diese die zwei angrenzenden, noch nicht aufgeschäumten Hauptlagen auseinanderdrückt. Die Oberfläche der Stirnseite des Brandschutzbandes wird dadurch vergrößert, sodass ein größerer Bereich des intumeszierenden Materials der Hitze bzw. dem Feuer ausgesetzt ist und durch diese aktiviert werden kann. Zudem wird die radial innenliegende Hauptlage, bevor diese aufschäumt, durch die Zwischenlage vom Rand des Durchbruches weg in den Durchbruch hinein bewegt. Die voneinander beabstandeten Hauptlagen können so ein wesentlich größeres Volumen ausfüllen, also einen Durchbruch mit einem größeren Querschnitt schließen. Insbesondere kann die innenliegende Hauptlage durch die Zwischenlage in einen Hohlraum bewegt werden, der durch eine schmelzende Leitung entsteht.

Die Zwischenlage kann auf verschiedene Weisen zwischen den Hauptlagen angeordnet sein. Beispielsweise erstreckt sich die Zwischenlage über die gesamte Fläche zwischen den Hauptlagen, also von den ersten Längsrändern bis zu den zweiten Längsrändern. Durch diese Anordnung der Zwischenlage werden die Hauptlagen vollständig auseinander gedrückt, sodass das Volumen und die Oberfläche des Brandschutzbandes vergrößert werden.

Bei einer alternativen Ausführungsform ist die Zwischenlage lediglich an den ersten Längsrändern der Hauptlagen angeordnet, und die zweiten Längsränder der Hauptlagen sind ohne Vorhandensein einer Zwischenlage flexibel miteinander verbunden. In dieser Ausführungsform können die Hauptlagen gewissermaßen um die zweiten Längsränder auseinander geklappt werden, sodass eine der beiden Hauptlagen in einem Winkel zur anderen Hauptlage absteht. Im Brandfall wird die Zwischenlage bereits bei einer Temperatur unterhalb der Aktivierungstemperatur der Hauptlagen aktiviert und aufgeschäumt. Die Hauptlagen werden dadurch auseinander gespreizt, sodass sich die innen liegende Hauptlage gewissermaßen im Durchbruch aufstellt. Dadurch wird der Querschnitt, durch den Rauch oder Feuer durchtreten kann, bereits deutlich reduziert. Zudem wird insbesondere von der innenliegenden Hauptlage eine Oberfläche dem Feuer bzw. den ansteigenden Temperaturen ausgesetzt, sodass eine schnellere vollständige Aktivierung der Hauptlagen erfolgt. Vorzugsweise wird ein solches Brandschutzband so in den Durchbruch gelegt, dass sich die ersten Längsränder, an denen sich die Zwischenlage befindet, näher an der Außenseite der Wand oder der Decke befinden und eine schnelle Erhitzung der Zwischenlage und somit ein Aufklappen der Hauptlagen sichergestellt ist.

Bei dieser Ausführungsform sind die Hauptlagen vorzugsweise so flexibel miteinander verbunden, dass diese beim Aufschäumen der Zwischenlage auseinanderklaffen und eine wesentlich größere Fläche bereitgestellt wird, die durch das Feuer erhitzt werden kann.

Beispielsweise ist ein flexibles Verbindungsmittel vorgesehen, das die zweiten Längsränder der Hauptlagen flexibel, wie ein Schwenklager, miteinander verbindet. Dieses Verbindungsmittel kann ein Verbindungsband sein, das eine flexible Koppelung der Hauptlagen miteinander ermöglicht. Insbesondere kann das Verbindungsmittel ein Glasfasergewebeband sein, das auch bei den im Brandfall auftretenden hohen Temperaturen eine zuverlässige Verbindung der Hauptlagen miteinander ermöglicht. Das Verbindungsmittel kann auf verschiedene Weisen mit den Hauptlagen verbunden sein. Es ist beispielsweise möglich, dass sich das Verbindungsmittel in die beiden Hauptlagen hinein erstreckt, die Hauptlagen also gewissermaßen um das Verbindungsmittel herum gegossen sind. Diese Verbindung ermöglicht eine zuverlässige Fixierung der Hauptlagen am Verbindungsmittel, auch wenn die Hauptlagen aufschäumen.

Alternativ ist es auch möglich, dass die Hauptlagen flächig mit dem Verbindungsmittel gekoppelt sind, insbesondere auf dieses aufgeklebt sind. Dadurch ist eine einfachere Verbindung der Hauptlagen mit dem Verbindungsmittel, beispielsweise auch nach Herstellung der Hauptlagen, möglich.

Vorzugsweise ist das Verbindungsmittel so ausgebildet, dass die Hauptlagen im Querschnitt betrachtet V-förmig durch die Zwischenlage auseinandergespreizt werden, also gewissermaßen aufklaffen. Es ist aber auch möglich, dass das Verbindungsmittel so ausgebildet ist, dass die Hauptlagen zunächst parallel zueinander auseinandergedrückt werden können. In einer solchen Ausführungsform weist das Verbindungsmittel einen Zwischenabschnitt zwischen der ersten und der zweiten Hauptlage auf, durch den der Abstand der zweiten Längsränder zueinander definiert ist. In einem Ausgangszustand ist dieser Zwischenabschnitt insbesondere gefaltet, sodass dieser beispielsweise platzsparend zwischen den Hauptlagen am Brandschutzband angeordnet werden kann.

Das Brandschutzband kann auch mehrere Hauptlagen aufweisen, zwischen denen jeweils eine Zwischenlage vorgesehen ist. Die Anzahl der Haupt- und Zwischenlagen kann an die gewünschten Aufschäumeigenschaften sowie den zu schließenden Durchbruch angepasst werden. Auch bei einer solchen Ausführungsform ist es möglich, dass sich die Zwischenlagen von den ersten bis zu den zweiten Längsrändern der anliegenden Hauptlagen erstrecken. Alternativ ist es denkbar, dass die Zwischenlagen an einem der Längsränder benachbarter Hauptlagen angeordnet sind und die entgegengesetzten Längsränder der angrenzenden Lagen flexibel miteinander verbunden sind.

Bei einer solchen Ausführungsform ist es beispielsweise denkbar, dass zumindest drei Hauptlagen aus einem intumeszierenden Material vorgesehen sind, wobei zwischen benachbarten Hauptlagen nur an einem der beiden Längsränder eine Zwischenlage vorgesehen ist und darauffolgende Zwischenlagen abwechselnd nur an den ersten oder den zweiten Längsrändern vorgesehen sind. Vorzugsweise sind die Ränder, an denen keine Zwischenlage vorgesehen ist, jeweils mit einem flexiblen Verbindungsmittel miteinander verbunden, sodass die Hauptlagen mit dem Verbindungsmittel ziehharmonikaartig gekoppelt sind. Die Hauptlagen werden in dieser Ausführungsform im Brandfall abwechselnd an entgegengesetzten Rändern auseinander gedrückt, also ziehharmonikaartig, auseinandergedrückt. Durch die abwechselnd an beiden Längsrändern vorgesehen Zwischenlagen ist ein schnelles Expandieren des Brandschutzbandes möglich, unabhängig davon, auf welcher Seite der Wand die Hitzeentwicklung erfolgt.

Bei dieser Ausführungsform können mehrere separate Verbindungsmittel verwendet werden, die jeweils zwei benachbarte Hauptlagen verbinden. Es ist aber auch möglich, dass alle Hauptlagen mit einem einzigen Verbindungsmittel, das sich ziehharmonikaartig durch das Brandschutzband erstreckt, verbunden sind.

Die Zwischenlage kann lediglich zwischen die Hauptlagen eingelegt sein. Um ein Herausfallen der Zwischenlage zu verhindern, ist die Zwischenlage aber mit zumindest einer der benachbarten Hauptlagen form- und/oder stoffschlüssig verbunden.

Zumindest eine der Hauptlagen kann quer zu einem der Längsränder verlaufende, sich vom Längsrand weg erstreckende Rippen und/oder Kanäle aufweisen, durch die eine bessere Temperatureinleitung in die jeweilige Hauptlage und eine schnellere Aktivierung des intumeszierenden Materials, insbesondere der Zwischenlage, möglich ist.

Zwischen benachbarten Hauptlagen und/oder zwischen einer Zwischenlage und den an der Zwischenlage anliegenden benachbarten Hauptlagen kann des Weiteren eine Trennschicht vorgesehen sein, insbesondere eine Trennfolie. Diese Trennfolie verhindert ein Verkleben der Hauptlagen miteinander, sodass diese bei Aktivierung der intumeszierenden Zwischenlage einfacher auseinandergedrückt werden können.

Um das Brandschutzband während der Montage bzw. beim Einsetzen von Leitungen in den Durchbruch zu schützen, ist beispielsweise eine Textillage vorgesehen, die das Brandschutzband außenseitig zumindest teilweise umhüllt. Die Textillage kann beispielsweise im Querschnitt betrachtet U-förmig ausgebildet sein und gleichzeitig die Funktion eines flexiblen Verbindungsmittels aufweisen, das zwei außenliegende Hauptlagen miteinander verbindet. In dieser Ausführungsform werden die Längsränder, an welchen die Zwischenlage vorgesehen ist, freigehalten bzw. die Textillage ist an diesen Rändern unterbrochen, sodass die Hauptlagen durch die Zwischenlage einfach auseinandergedrückt werden können.

Weitere Vorteile und Merkmale finden sich in der nachfolgenden Beschreibung in Verbindung mit den beigefügten Zeichnungen. In diesen zeigen:
- Figur 1: eine erste Ausführungsform eines erfindungsgemäßen Brandschutzbandes in eingebautem Zustand,
- Figur 2: das Brandschutzband aus Figur 1 in aufgeschäumtem Zustand,
- Figur 3: eine zweite Ausführungsform eines erfindungsgemäßen Brandschutzbandes nach Aktivierung der Zwischenlage,
- Figur 4: eine dritte Ausführungsform eines erfindungsgemäßen Brandschutzbandes,
- Figur 5: eine Variante des Brandschutzbandes aus Figur 4,
- Figur 6: eine vierte Ausführungsform eines erfindungsgemäßen Brandschutzbandes, und
- Figur 7: eine fünfte Ausführungsform eines erfindungsgemäßen Brandschutzbandes.

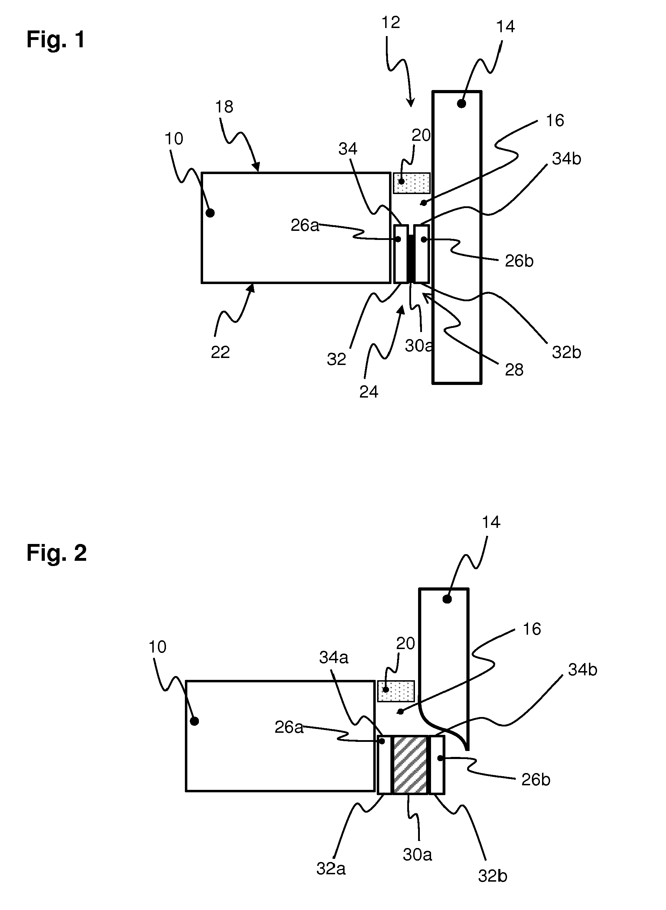

In Figur 1 ist eine Decke 10 eines Gebäudes dargestellt, die einen Durchbruch 12 für eine Leitung 14 aufweist. Die Leitung 14 ist beispielsweise ein Abwasserrohr aus Polyester oder Polypropylen, das zusätzlich eine Schalldämmung aus Mineralstoffen aufweisen kann. Zwischen der Leitung 14 und der Decke 10 ist ein ringförmiger Spalt 16 vorhanden. An der Oberseite 18 ist dieser Spalt durch ein Dichtelement 20 verschlossen. An der Unterseite 22 der Decke 10 ist ein Brandschutzband 24 vorgesehen, dessen Aufbau und Funktion nachfolgend erläutert werden.

Das Brandschutzband 24 hat die Aufgabe, bei einem Brand den Durchbruch 12 zu verschließen, um ein Durchtreten von Rauch oder Feuer zu verhindern oder zu verzögern, indem das Brandschutzband 24 aufschäumt und den Durchbruch 12 verschließt. Dazu ist es erforderlich, dass das Brandschutzband 24 nicht nur den Spalt 16 füllen kann, sondern den gesamten Durchbruch 12, da das Material der Leitung 14 einen niedrigeren Schmelzpunkt hat und somit bei den während eines Brandes auftretenden Temperaturen schmelzen bzw. sich einschnüren kann (siehe auch Figur 2). Diese Leitungen sind beispielsweise aus Polyester, das eine Schmelztemperatur zwischen 130 °C bis 145 °C hat, oder Polypropylen mit einer Schmelztemperatur 160 °C hergestellt.

Das Brandschutzband 24 wird als Endlosmaterial, beispielsweise auf einer Rolle angeliefert und in Umfangsrichtung umlaufend um die Leitung 14 in den Durchbruch 12 bzw. den Spalt 16 eingelegt. In der hier gezeigten Ausführungsform füllt das Brandschutzband 24 den Spalt 16 in radialer Richtung vollständig aus, sodass bereits in eingebautem Zustand des Brandschutzbandes 24 auch eine Schallschutzfunktion zwischen der Unterseite 22 und der Oberseite 18 gegeben ist. Es ist aber auch möglich, dass bei eingelegtem Brandschutzband 24 ein Spalt zwischen dem Brandschutzband 24 und der Leitung 14 vorhanden ist.

Das Brandschutzband 24 besteht aus zwei Hauptlagen 26a, 26b, die sich in Längsrichtung des Brandschutzbandes 24, also in eingebautem Zustand in Umfangrichtung um die Leitung, erstrecken. Die Hauptlagen 26a, 26b bestehen jeweils aus einem ersten intumeszierenden Material, also einem Material, das bei hohen Temperaturen aufschäumt und so sein Volumen vergrößert. Durch diese Volumenvergrößerung kann der Durchbruch 12 geschlossen werden, sodass Rauch und Feuer nicht durch den Durchbruch 12 durchtreten können.

Wie in Figur 1 zu sehen ist, ist die Stirnfläche 28, die im Brandfall den hohen Temperaturen ausgesetzt ist, relativ klein. Bei einer starken Hitzeentwicklung würde zunächst nur das Material an der Stirnfläche 28 reagieren und aufschäumen. Durch das Aufschäumen würde bei den bisher bekannten Brandschutzbändern aber eine Isolierung des dahinterliegenden Materials der Hauptlagen 26a, 26b gegenüber der ansteigenden Hitze erfolgen, sodass es zu einer Verzögerung des Aufschäumvorgangs kommen würde.

Darüber hinaus erfolgt durch das Material der Decke 10 eine Abschirmung der Hitze bzw. eine Kühlung des Material der Hauptlage 26a, das unmittelbar an der Decke 10 anliegt.

Die Intumeszenztemperatur der üblicherweise für solche Brandschutzbänder verwendeten intumeszierenden Materialien liegt zudem deutlich höher als die Schmelztemperatur des Materials, aus dem die Leitung 14 hergestellt ist. Übliche Temperaturen zur Aktivierung eines intumeszierenden Materials liegen bei 200 °C.

Die Leitung würde also vor dem Aufschäumen des intumeszierenden Materials schmelzen, sodass ein größerer Querschnitt geschlossen werden muss. Wie in Figur 2 zu sehen ist, schnürt sich die Leitung 14 relativ schnell ein, sodass ein wesentlich größerer Bereich durch das Brandschutzband 24 zu füllen ist.

Um die Oberfläche des Brandschutzbandes 24 zu Beginn des Aufschäumvorgangs zu vergrößern und so ein schnelleres Aufschäumen des gesamten Materials der Hauptlagen 26a, 26b und ein Verschließen des Durchbruchs 12 zu erreichen, ist zwischen den benachbarten Hauptlagen 26a, 26b eine Zwischenlage 30a vorgesehen, die aus einem zweiten intumeszierenden Material besteht. Dieses zweite intumeszierende Material hat eine deutlich geringere Reaktionstemperatur als das Material der Hauptlagen, sodass dieses bereits bei geringeren Temperaturen aufschäumt.

Zu Beginn des Aufschäumvorgangs wird also zunächst die Zwischenlage 30a aktiviert und schäumt auf. Durch das Aufschäumen der Zwischenlage 30a werden die Hauptlagen 26a, 26b auseinandergedrückt, wodurch zum einen die Oberfläche, die den erhöhten Temperaturen ausgesetzt ist, vergrößert wird. Zum anderen wird die innere Hauptlage 26b weiter in die Mitte des Durchbruchs 12 verschoben. Wenn anschließend die Hauptlagen 26a, 26b aufschäumen, behindern sich diese nicht gegenseitig und können zudem ein wesentlich größeres Volumen im Durchbruch 12 verschließen.

Durch die Zwischenlage wird also sichergestellt, dass die beiden Hauptlagen 26a, 26b schneller und ungehinderter aufschäumen und den Durchbruch 12 verschließen können.

Die Zwischenlage 30a besteht beispielsweise aus einer Acrylatdispersion, die ein Treibmittel enthält, das bei einer sehr geringen Temperatur aktiviert wird. Zusätzlich kann die Zwischenlage 30a so ausgebildet sein, dass diese nicht nur aufschäumt, sondern auch stark exotherm reagiert. Die Zwischenlage 30a kann so zusätzlich die Temperatur erhöhen, sodass sichergestellt ist, dass die angrenzenden Hauptlagen 26a, 26b schnell aktiviert werden und sich ausdehnen.

Diese Acrylatdispersion wird beispielsweise auf die erste Hauptlage 26a aufgetragen. Vor dem Aushärten der Zwischenlage 30a wird die zweite Hauptlage 26b auf die Zwischenlage 30a aufgelegt, sodass diese nach dem Aushärten der Zwischenlage 30a fest miteinander verbunden sind. Die Zwischenlage 30a muss also keine tragenden Eigenschaften aufweisen.

In der hier gezeigten Ausführungsform erstreckt sich die Zwischenlage 30a über die gesamte Breite der Hauptlagen 26a, 26b, also jeweils von einem ersten Längsrand 32a, 32b bis zu einem zweiten Längsrand 34a, 34b. Die Hauptlagen 26a, 26b sind also flächig durch die Zwischenlage 30a miteinander verbunden. Dadurch wird die zweite Hauptlage 26b im Brandfall durch das Aufschäumen der Zwischenlage 30a parallel zur ersten Hauptlage 26a von dieser weg in den Durchbruch 12 verschoben.

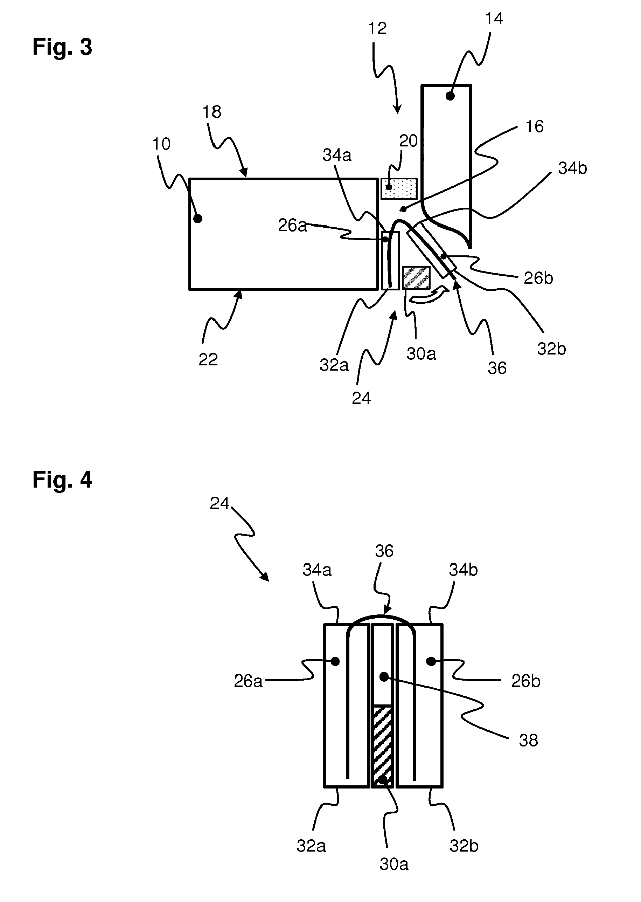

Eine zweite Ausführungsform eines erfindungsgemäßen Brandschutzbandes 24 ist in Figur 3 gezeigt. Die zwei Hauptlagen 26a, 26b sind in dieser Ausführungsform durch ein flexibles Verbindungsmittel 36, beispielsweise ein Glasfasergewebeband, an den zweiten Längsrändern 34a, 34b flexibel miteinander verbunden. Die Zwischenlage 30a ist lediglich im Bereich der ersten Längsränder 32a, 32b vorgesehen. An den zweiten Längsrändern 34a, 34b ist keine Zwischenlage vorgesehen.

Durch diesen Aufbau werden die Hauptlagen 26a, 26b bei Aktivierung der Zwischenlage 30a an den ersten Längsrändern 32a, 32b auseinandergedrückt, während die zweiten Längsränder 34a, 34b durch das Verbindungsmittel zusammen gehalten werden. Nach Aktivierung der Zwischenlage 30a klaffen die Hauptlagen 26a, 26b im Querschnitt betrachtet V-förmig auseinander. Die zweite Hauptlage 26b wird gewissermaßen um die zweiten Längsränder 34a, 34b verschwenkt, sodass diese im Querschnitt betrachtet in den Durchbruch 12 hineinragt.

Durch die schräg bzw. fast senkrecht in den Durchbruch ragende zweite Hauptlage 26a ist bereits der Querschnitt des Durchbruchs 12, durch den Feuer oder Rauch durchtreten können, deutlich reduziert. Durch ein Aufschäumen der zweiten Hauptlage 26b ist bei dieser Ausführungsform so ein wesentlich schnelleres Verschließen des gesamten Durchbruchs 12 möglich.

In Figur 4 ist eine dritte Ausführungsform eines erfindungsgemäßen Brandschutzbandes 24 gezeigt, die im Wesentlichen auf der in Figur 3 gezeigten Ausführungsform beruht. Zwischen den Hauptlagen 26a, 26b ist zusätzlich eine Trennschicht 38 vorgesehen, durch die die Hauptlagen 26a, 26b im Bereich des zweiten Längsrandes 34a, 34b voneinander getrennt werden. Diese Trennschicht 38 ist beispielsweise eine Folie aus Polyethylen und stellt sicher, dass die Expansion der Zwischenlage 30a nicht durch ein Verkleben der beiden Hauptlagen 26a, 26b behindert wird.

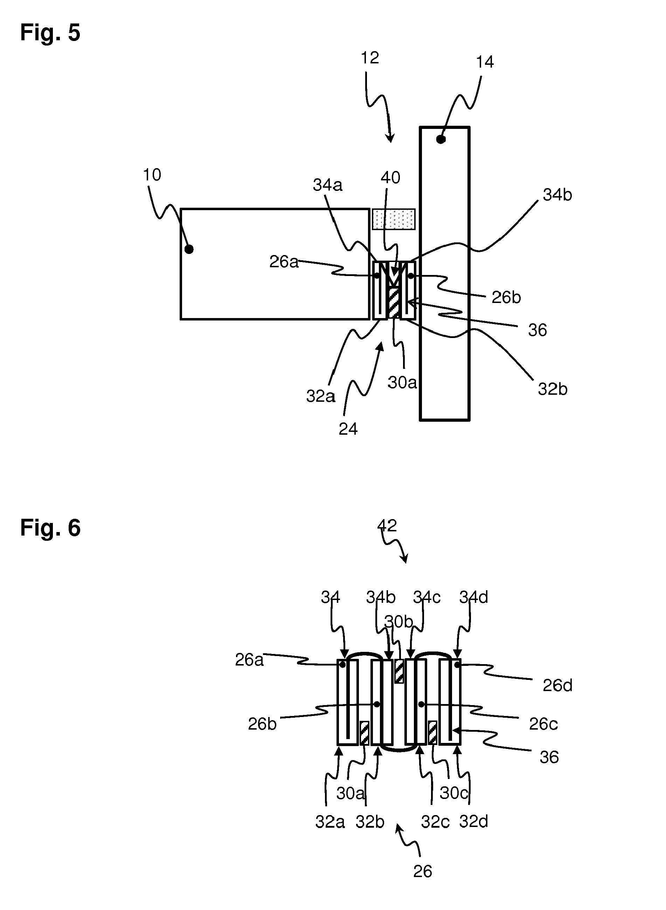

In der in Figur 5 gezeigten Ausführungsform weist das Verbindungsmittel 36 zwischen den Hauptlagen 26a, 26b einen gefalteten Zwischenabschnitt 40 auf, der bei einer Aktivierung der Zwischenlage 30a auch ein Entfernen der zweiten Längsränder 34a, 34b voneinander ermöglicht.

Unabhängig von der Ausführungsform des Verbindungsmittels 36 kann dieses entweder flächig auf der Außenseite der Hauptlagen 26a, 26b mit diesen verbunden sein, beispielsweise auf diese aufgeklebt sein. Alternativ ist es auch möglich, dass sich das Verbindungsmittel mit einem Abschnitt in die Hauptlagen 26a, 26b hinein erstreckt. Die Herstellung des Brandschutzbandes 24 erfolgt beispielsweise, indem eine Lage aus einem fließfähigen oder streichfähigen intumeszierenden Material in eine Form gegossen wird. Anschließend wird das Verbindungsmittel 36 auf das Material aufgelegt. Abhängig davon, wie flüssig das Material ist, kann das Verbindungsmittel 36 in dieses einsinken oder auf dessen Oberfläche liegen bleiben und sich stoffschlüssig mit dieser verbinden. Sinkt das Verbindungsmittel 36 nicht in das Material ein, kann weiteres Material in die Form eingebracht werden, sodass das Verbindungsmittel 36 von diesem umschlossen ist.

Anschließend wir die Trennschicht 38 auf die Oberfläche aufgebracht, beispielsweise aufgelegt. Dies kann in noch feuchtem Zustand des Materials erfolgen, sodass sich die Trennschicht 38 stoffschlüssig mit dem Material verbindet. Nachfolgend wird die Zwischenlage auf die Trennschicht aufgebracht.

In einem letzten Herstellungsschritt wird das Material mit dem Verbindungsmittel 36 in noch nicht ausgehärtetem Zustand des Material so zusammengelegt, dass sich die Zwischenlage zwischen zwei Abschnitten des Material befindet, die jeweils die erste und die zweite Hauptlage 26a, 26b definieren. Ist das Material noch nicht ausgehärtet, ist dieses wesentlich flexibler, sodass der Faltvorgang wesentlich einfacher ist.

Eine weitere Ausführungsform ist in Figur 6 gezeigt. Diese basiert im Wesentlichen auf der in Figur 3 gezeigten Ausführungsform. Statt zwei Hauptlagen 26a, 26b sind hier aber weitere Hauptlagen 26c, 26d vorgesehen. Die Hauptlagen 26a, 26b, 26c, 26d sind durch ein durchgehendes Verbindungsmittel 36 miteinander verbunden, wobei das Verbindungsmittel 36 im Wesentlichen ziehharmonikaartig verläuft und abwechselnd die beiden ersten Längsränder 32a und 32b bzw. 32c und 32d und die ersten Längsränder 34b und 34c miteinander verbindet. Die Hauptlagen 26a, 26b, 26c, 26d können also ziehharmonikaartig auseinandergefaltet werden.

An den Längsrändern, die nicht über das Verbindungsmittel 36 miteinander gekoppelt sind, also zwischen den Längsrändern 34a und 34b, 34c und 34d sowie 32b und 32c, ist jeweils eine Zwischenlage 30a, 30b, 30c vorgesehen. Durch diese Anordnung ist nicht nur an der ersten Stirnfläche 28, sondern auch bei einem Brand auf der zweiten Stirnfläche 42 eine Aktivierung von Zwischenlagen und somit eine Vergrößerung der Oberfläche des Brandschutzbandes 24 sichergestellt.

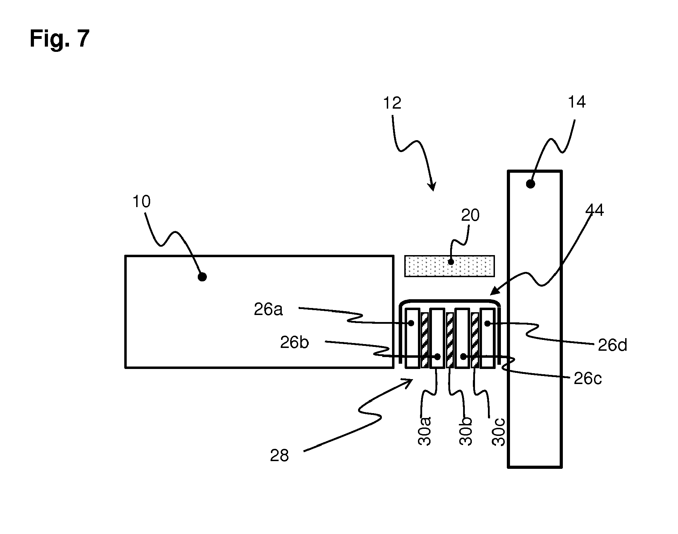

Auch bei dem in Figur 1 gezeigten Prinzip ist die Verwendung mehrerer Hauptlagen 26a, 26b, 26c, 26d mit dazwischenliegenden, durchgehenden Zwischenlagen 30a, 30b, 30c möglich, wie in der Ausführungsform in Figur 7 zu sehen ist. In dieser Ausführungsform ist zusätzlich eine Textillage 44 vorgesehen, die das Brandschutzband 24 außenseitig zumindest teilweise umhüllt, wobei die Stirnfläche 28 freigehalten ist, sodass eine Aktivierung der Zwischenlagen 30a, 30b, 30c nicht behindert wird.

Unabhängig von den gezeigten Ausführungsformen kann die Zwischenlage 30a, 30b, 30c beliebig zwischen zwei Hauptlagen 26a, 26b, 26c, 26d angeordnet werden, wobei lediglich sicherzustellen ist, dass die Zwischenlage 30a, 30b, 30c durch die ansteigende Temperatur möglichst schnell aktiviert wird.

Um eine schnellere Wärmeeinleitung in die Hauptlagen 26a, 26b zu erreichen, können diese unabhängig von der Ausführungsform des Brandschutzbandes 24 auch mit Rippen oder Kanälen versehen sein, die sich von den ersten Längsrändern 32a, 32b oder den zweiten Längsrändern 34a, 34b in die jeweilige Hauptlage 26a, 26b hinein erstrecken.

## Patentansprüche

1. Brandschutzband (24) zum Einlegen in Durchbrüche (12) in Wänden oder Decken (10) von Gebäuden, mit zumindest zwei Hauptlagen (26a, 26b, 26c, 26d) aus einem intumeszierenden Material, die an einer Außenseite jeweils einen ersten Längsrand (32a, 32b, 32c, 32d) und an der entgegengesetzten Außenseite jeweils einen zweiten Längsrand (34a, 34b, 34c, 34d) haben, und zumindest einer zwischen benachbarten Hauptlagen (26a, 26b, 26c, 26d) angeordneten Zwischenlage (30a, 30b, 30c) aus einem zweiten intumeszierenden Material, wobei das zweite intumeszierende Material eine geringere Intumeszenztemperatur aufweist als das Material der Hauptlagen (26a, 26b, 26c, 26d).

2. Brandschutzband nach Anspruch 1, **dadurch gekennzeichnet, dass** sich die Zwischenlage (30a, 30b, 30c) von den ersten Längsrändern (32a, 32b, 32c, 32d) bis zu den zweiten Längsrändern (34a, 34b, 34c, 34d) der Hauptlagen (26a, 26b, 26c, 26d) erstreckt.

3. Brandschutzband nach Anspruch 1, **dadurch gekennzeichnet, dass** die Zwischenlage (30a, 30b, 30c) an den ersten Längsrändern (32a, 32b, 32c, 32d) der Hauptlagen (26a, 26b, 26c, 26d) angeordnet ist und die zweiten Längsränder (34a, 34b, 34c, 34d) der Hauptlagen (26a, 26b, 26c, 26d) ohne Vorhandensein einer Zwischenlage flexibel miteinander verbunden sind.

4. Brandschutzband nach Anspruch 3, **dadurch gekennzeichnet, dass** die Hauptlagen (26a, 26b, 26c, 26d) nach Aktivierung der Zwischenlage (30a, 30b, 30c) an den ersten Längsrändern (32a, 32b, 32c, 32d) auseinanderklaffen.

5. Brandschutzband nach Anspruch 3 oder 4, **dadurch gekennzeichnet, dass** ein flexibles Verbindungsmittel (36), insbesondere ein Verbindungsband, vorgesehen ist, das die zweiten Längsränder (34a, 34b, 34c, 34d) der Hauptlagen (26a, 26b, 26c, 26d) flexibel miteinander verbindet, wobei das Verbindungsmittel (36) insbesondere ein Glasfasergewebeband ist.

6. Brandschutzband nach Anspruch 5, **dadurch gekennzeichnet, dass** sich das Verbindungsmittel (36) in die Hauptlagen (26a, 26b, 26c, 26d) erstreckt.

7. Brandschutzband nach Anspruch 5 oder 6, **dadurch gekennzeichnet, dass** die Hauptlagen (26a, 26b, 26c, 26d) flächig mit dem Verbindungsmittel (36) gekoppelt sind, insbesondere aufgeklebt sind.

8. Brandschutzband nach einem der Ansprüche 5 bis 7, **dadurch gekennzeichnet, dass** das Verbindungsmittel (36) einen insbesondere gefalteten Zwischenabschnitt (40) zwischen den Hauptlagen (26a, 26b, 26c, 26d) aufweist.

9. Brandschutzband nach einem der vorhergehenden Ansprüche, **dadurch gekennzeichnet, dass** zumindest drei Hauptlagen (26a, 26b, 26c, 26d) aus einem intumeszierenden Material vorgesehen sind, wobei zwischen benachbarten Hauptlagen (26a, 26b, 26c, 26d) nur an einem der beiden Längsränder (32a bis 32d, 34a bis 34d) eine Zwischenlage (30a, 30b, 30c) vorgesehen ist, und darauffolgende Zwischenlagen (30a, 30b, 30c) abwechselnd nur an den ersten Längsrändern (32a bis 32d) und den zweiten Längsrändern (34a bis 34d) vorgesehen sind.

10. Brandschutzband nach einem der vorhergehenden Ansprüche, **dadurch gekennzeichnet, dass** die Zwischenlage (30a, 30b, 30c) mit zumindest einer benachbarten Hauptlage (26a, 26b, 26c, 26d) form- und/oder stoffschlüssig verbunden ist.

11. Brandschutzband nach einem der vorhergehenden Ansprüche, **dadurch gekennzeichnet, dass** auf zumindest einer Hauptlage (26a, 26b, 26c, 26d) quer zu einem Längsrand (32a bis 32d, 34a bis 34d) sich vom Längsrand (32a bis 32d, 34a bis 34d) weg erstreckende Rippen und/oder Kanäle vorgesehen sind.

12. Brandschutzband nach einem der vorhergehenden Ansprüche, **dadurch gekennzeichnet, dass** zwischen benachbarten Hauptlagen (26a, 26b, 26c, 26d) und/oder zwischen der Zwischenlage (30a, 30b, 30c, 30d) und den zugeordneten benachbarten Hauptlagen (26a, 26b, 26c, 26d) eine Trennschicht (38), insbesondere eine Trennfolie, vorgesehen ist.

13. Brandschutzband nach einem der vorhergehenden Ansprüche, **dadurch gekennzeichnet, dass** eine Textillage (44) vorgesehen ist, die das Brandschutzband außenseitig zumindest teilweise umhüllt.
